# EUROPEAN PATENT SPECIFICATION

(11) **EP 4 224 429 B1**
(45) Date of publication and mention of the grant of the patent: **16.10.2024**
(21) Application number: 23150299.8
(22) Date of filing: 04.01.2023
(51) Int. Cl.: G06T 19/20, G06T 7/00, G06V 10/00

(54) **SYSTEMS AND METHODS FOR VISUALLY INDICATING STALE CONTENT IN ENVIRONMENT MODEL**
SYSTEME UND VERFAHREN ZUR VISUELLEN ANZEIGE VON VERALTETEM INHALT IN EINEM UMGEBUNGSMODELL
SYSTÈMES ET PROCÉDÉS POUR INDIQUER VISUELLEMENT UN CONTENU PÉRIMÉ DANS UN MODÈLE D'ENVIRONNEMENT

(30) Priority: 02.02.2022 US 202217591243
(43) Date of publication of application: 09.08.2023
(73) Proprietor: Varjo Technologies Oy, 00100 Helsinki (FI)
(72) Inventor: Strandborg, Mikko, Hangonkylä (FI); Timonen, Petteri, Helsinki (FI)
(74) Representative: Moosedog Oy

(56) References cited:
- PALAZZOLO EMANUELE ET AL: "Fast Image-Based Geometric Change Detection Given a 3D Model", 2018 IEEE INTERNATIONAL CONFERENCE ON ROBOTICS AND AUTOMATION (ICRA), IEEE, 21 May 2018 (2018-05-21), pages 6308 - 6315, XP033403453, DOI: 10.1109/ICRA.2018.8461019
- ULUSOY ALI OSMAN ET AL: "Image-Based 4-d Reconstruction Using 3-d Change Detection", 2014, 16TH EUROPEAN CONFERENCE - COMPUTER VISION - ECCV 2020, PAGE(S) 31 - 45, XP047530928
- POLLARD THOMAS ET AL: "Change Detection in a 3-d World", COMPUTER VISION AND PATTERN RECOGNITION, 2007. CVPR '07. IEEE CONFERENCE ON, 1 June 2007 (2007-06-01), pages 1 - 6, XP093046979, ISBN: 978-1-4244-1180-1, Retrieved from the Internet <URL:https://ieeexplore.ieee.org/stampPDF/getPDF.jsp?tp=&arnumber=4270098&ref=> DOI: 10.1109/CVPR.2007.383073
- MANUEL DAHNERT ET AL: "Panoptic 3D Scene Reconstruction From a Single RGB Image", ARXIV.ORG, CORNELL UNIVERSITY LIBRARY, 201 OLIN LIBRARY CORNELL UNIVERSITY ITHACA, NY 14853, 3 November 2021 (2021-11-03), XP091094201

## Description

### TECHNICAL FIELD

The present disclosure relates to systems for visually indicating stale content in environment models. The present disclosure also relates to methods for visually indicating stale content in environment models.

### BACKGROUND

In recent times, there has been an ever-increasing demand for image generation and processing. For example, such a demand may be quite high and critical in case of evolving technologies such as immersive extended-reality (XR) technologies which are being employed in various fields such as entertainment, real estate, training, medical imaging operations, simulators, navigation, and the like. Several advancements are being made to develop image generation and processing technology. Typically, three-dimensional (3D) models (for example, in form of 3D polygonal mesh, 3D point cloud, 3D grid, and the like) of real-world environments are generated and are subsequently employed as input for generating images to be displayed. The 3D models are typically created using images of the real-world environments that are captured by one or more cameras.

Presently, the 3D models are quite limited in terms of accurately representing an entirety of the real-world environments, as at any given time, the one or more cameras only provide only a partial coverage of the real-world environment in real time and representations in the 3D models of anything that is not presently in view of the one or more cameras are not updated. This leads to stale (i.e., obsolete or old) representations being present in the 3D models. This issue is extremely problematic in case of dynamic objects (i.e., objects which are prone to change in their properties, for example, such as a change in their locations and/or orientations) present in the real-world environments. For example, if a person standing in a room at a first location is imaged in a first image, and if the person later moves to a second location and is imaged in a second image, the 3D model generated using the first and second images would contain two representations of the same person at two different locations. Herein, one of the representations, i.e., the representation generated using the first image, is inaccurate as it is based on a stale information about location of the person. Moreover, when images are reconstructed using such inaccurate 3D models, such images do not accurately represent the objects of the real-world environment and are often unrealistic. PALAZZOLO EMANUELE ET AL: "Fast Image-Based Geometric Change Detection Given a 3D Model" (IEEE INTERNATIONAL CONFERENCE ON ROBOTICS AND AUTOMATION (ICRA), IEEE, 21 May 2018 (2018-05-21), pages 6308-6315, DOl: 10.1109/ICRA.2018.8461019) discloses a method of dynamic-object change detection in a 3D model of a scene by obtaining (re-projecting) the content of a first image as viewed from a second image's perspective and comparing the re-projected first image with the content of the second image.

Therefore, in light of the foregoing discussion, there exists a need to overcome the aforementioned drawbacks associated with accuracy of 3D models of real-world environments.

### SUMMARY

The present invention is defined by the appended independent claims.

The present disclosure seeks to provide a system for visually indicating stale content in an environment model. The present disclosure also seeks to provide a method for visually indicating stale content in an environment model. An aim of the present disclosure is to provide a solution that overcomes at least partially the problems encountered in prior art.

In one aspect, an embodiment of the present disclosure provides a system comprising at least one server configured to:
- receive a plurality of images of a real-world environment captured by at least one camera;
- process the plurality of images to detect a plurality of objects present in the real-world environment and generate a three-dimensional environment model of the real-world environment, wherein the three-dimensional environment model represents the plurality of objects;
- classify each of the plurality of objects as either a static object or a dynamic object;
- receive at least one current image of the real-world environment captured by the at least one camera;
- process the at least one current image to detect at least one object represented therein;
- determine whether or not the at least one object is from amongst the plurality of objects;
- determine whether the at least one object is a static object or a dynamic object when it is determined that the at least one object is from amongst the plurality of objects; and
- for each dynamic object that is represented in the three-dimensional environment model but not in the at least one current image, apply a first visual effect to a representation of said dynamic object in the three-dimensional environment model for indicating staleness of said representation.

In another aspect, an embodiment of the present disclosure provides a method comprising:
- receiving a plurality of images of a real-world environment captured by at least one camera;
- processing the plurality of images to detect a plurality of objects present in the real-world environment and generate a three-dimensional environment model of the real-world environment, wherein the three-dimensional environment model represents the plurality of objects;
- classifying each of the plurality of objects as either a static object or a dynamic object;
- receiving at least one current image of the real-world environment captured by the at least one camera;
- processing the at least one current image to detect at least one object represented therein;
- determining whether or not the at least one object is from amongst the plurality of objects;
- determining whether the at least one object is a static object or a dynamic object when it is determined that the at least one object is from amongst the plurality of objects; and
- for each dynamic object that is represented in the three-dimensional environment model but not in the at least one current image, applying a first visual effect to a representation of said dynamic object in the three-dimensional environment model for indicating staleness of said representation.

Embodiments of the present disclosure substantially eliminate or at least partially address the aforementioned problems in the prior art, and enable accurate and real-time visual indication of stale content in a three-dimensional environment model of a real-world environment.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIGs. 1A and 1B are block diagrams of architectures of a system for visually indicating stale content in an environment model, in accordance with different embodiments of the present disclosure;
FIGs. 2A and 2B collectively are an illustration of steps of a method for visually indicating stale content in an environment model, in accordance with an embodiment of the present disclosure; and
FIG. 3 is an illustration of an exemplary detailed processing flow implemented by a system for visually indicating stale content in an environment model, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a system comprising at least one server configured to:
- receive a plurality of images of a real-world environment captured by at least one camera;
- process the plurality of images to detect a plurality of objects present in the real-world environment and generate a three-dimensional environment model of the real-world environment, wherein the three-dimensional environment model represents the plurality of objects;
- classify each of the plurality of objects as either a static object or a dynamic object;
- receive at least one current image of the real-world environment captured by the at least one camera;
- process the at least one current image to detect at least one object represented therein;
- determine whether or not the at least one object is from amongst the plurality of objects;
- determine whether the at least one object is a static object or a dynamic object when it is determined that the at least one object is from amongst the plurality of objects; and
- for each dynamic object that is represented in the three-dimensional environment model but not in the at least one current image, apply a first visual effect to a representation of said dynamic object in the three-dimensional environment model for indicating staleness of said representation.

In another aspect, an embodiment of the present disclosure provides a method comprising:
- receiving a plurality of images of a real-world environment captured by at least one camera;
- processing the plurality of images to detect a plurality of objects present in the real-world environment and generate a three-dimensional environment model of the real-world environment, wherein the three-dimensional environment model represents the plurality of objects;
- classifying each of the plurality of objects as either a static object or a dynamic object;
- receiving at least one current image of the real-world environment captured by the at least one camera;
- processing the at least one current image to detect at least one object represented therein;
- determining whether or not the at least one object is from amongst the plurality of objects;
- determining whether the at least one object is a static object or a dynamic object when it is determined that the at least one object is from amongst the plurality of objects; and
- for each dynamic object that is represented in the three-dimensional environment model but not in the at least one current image, applying a first visual effect to a representation of said dynamic object in the three-dimensional environment model for indicating staleness of said representation.

The present disclosure provides the aforementioned system and the aforementioned method. Herein, the system effectively indicates staleness of representations of dynamic objects in the three-dimensional (3D) environment model, by applying the first visual effect to said representations of the dynamic objects. Said representations are accurately determined to be stale since the dynamic objects are not represented in the at least one current image. By visually indicating stale representations of the dynamic objects in the 3D model, the system facilitates accuracy and clarity in subsequent use of the 3D model (for example, for reconstructing images therefrom). Moreover, the at least one server repeatedly performs steps of receiving, processing, and using the current images, to keep updating the 3D environment model. By repetitively updating the 3D environment model in real-time or near real-time, representations of all objects in the 3D environment model are always accurate. The system is easy to implement and use. The method is fast, effective, and accurate.

It will be appreciated that the system visually indicates staleness of content represented in the three-dimensional (3D) environment model. Throughout the present disclosure, the term "*server*" refers to hardware, software, firmware or a combination of these. Notably, the at least one server controls an overall operation of the system. The at least one server is at least communicably coupled to the at least one camera or at least one device comprising the at least one camera. In an embodiment, the at least one server is implemented as a remote server. In such a case, the at least one server is separately located from the at least one camera. In such an instance, the at least one server is implemented as a processor of a computing device, or as a cloud-based server, or similar. Examples of the computing device include, but are not limited to, a laptop computer, a desktop computer, a tablet computer, a phablet, a personal digital assistant, a workstation, a console. It will be appreciated that the term "*at least one server*" refers to "*a single server*" in some implementations, and to "*a plurality of servers*" in other implementations.

The plurality of images represent the real-world environment from perspectives of the at least one camera. Herein, the term "*camera*" refers to equipment that is operable to detect and process light from the real-world environment, so as to capture images of the real-world environment. The at least one camera, in operation, captures these images for creation of the 3D environment model of the real-world environment, and for updating the 3D environment model. Optionally, the at least one camera is implemented as at least one of: a Red-Green-Blue (RGB) camera, a Red-Green-Blue-Depth (RGB-D) camera, a Red-Green-Blue-Alpha (RGB-A) camera, a monochrome camera.

Optionally, the at least one camera is a part of at least one device. The at least one device could be at least one teleport device and/or at least one display device. Herein, the term "*teleport device*" refers to a device capable of enabling virtual teleportation. Moreover, the term "*display device*" refers to any device that is capable of displaying images. Examples of a given display device include, but are not limited to, a television, a desktop computer, a laptop computer, a tablet computer, a phablet, a head-mounted display (HMD), and a smartphone. Herein, the term "*head-mounted display*" refers to a specialized equipment that is configured to present an extended-reality (XR) environment to a user when the HMD in operation is worn by the user on his/her head. In such an instance, the HMD acts as a display device (for example, such as an XR headset, a pair of XR glasses, and the like) that is operable to present a visual scene of the XR environment to the user. The visual scene of the XR environment comprises a sequence of XR images. Herein, the term "*extended-reality*" encompasses virtual reality, augmented reality, mixed reality, and the like.

Optionally, when processing the plurality of images to detect the plurality of objects present in the real-world environment, the at least one server is configured to employ at least one object detection algorithm. Examples of the at least one object detection algorithm include, but are not limited to, a region-based convolutional network method (R-CNN) algorithm, a fast region-based convolutional network (Fast R-CNN) algorithm, a faster region-based convolutional network (Faster R-CNN) algorithm, a region-based fully convolutional networks (R-FCN) algorithm, a single shot detector (SSD) algorithm, a spatial pyramid pooling (SPP-net) algorithm, and a you-only-look-once (YOLO) algorithm. The term "*object*" encompasses a physical object or a part of the physical object. Notably, the 3D environment model would represent the plurality of objects represented in the plurality of images that are utilised to generate the 3D environment model.

Throughout the present disclosure, the term "*three-dimensional environment model*" refers to a data structure that comprises comprehensive information pertaining to a 3D space of the real-world environment. Such a comprehensive information is indicative of at least one of: a plurality of features of objects present in the real-world environment, shapes and sizes of the objects or their portions, poses of the objects or their portions, materials of the objects or their portions, colours of the objects or their portions, light sources, lighting conditions within the real-world environment. Examples of the plurality of features include, but are not limited to, edges, corners, blobs and ridges. Optionally, the 3D environment model is in a form of at least one of: a 3D polygonal mesh, a 3D point cloud, a 3D surface cloud, a voxel-based model, a parametric model, a 3D grid, a 3D hierarchical grid, a bounding volume hierarchy. The 3D polygonal mesh could be a 3D triangular mesh, a 3D quadrilateral mesh.

Optionally, the 3D environment model is generated in a global coordinate space. Herein, the term "*global coordinate space*" refers to a 3D space of the real-world environment that is represented by a global coordinate system. Optionally, the global coordinate system has a predefined origin and three mutually perpendicular coordinate axes. The mutually perpendicular three coordinate axes could be, for example, X, Y, and Z axes. Optionally, in this regard, a position in the global coordinate system is expressed as (x, y, z) position coordinates along the X, Y and Z axes, respectively.

Optionally, when generating the 3D environment model of the real-world environment, the at least one server is configured to employ at least one data processing algorithm. Optionally, in this regard, the at least one data processing algorithm is utilised for at least one of: feature extraction, stitching the images together, image merging, interpolation, 3D modelling, photogrammetry, image layering, image blending, inpainting. Such data processing algorithms are well-known in the art.

Optionally, the system further comprises a data repository communicably coupled to the at least one server. Optionally, the at least one server is configured to store the 3D environment model at the data repository. The data repository may be implemented as a memory of the at least one server, a cloud-based memory, or similar.

Optionally, when classifying each of the plurality of objects as either a static object or a dynamic object, the at least one server is configured to employ at least one object classification algorithm. Examples of the at least one object classification algorithm include, but are not limited to, a K-means algorithm, an iterative self-organizing data analysis technique algorithm (ISODATA), a geometric features matching algorithm, a logistic regression algorithm, a decision tree algorithm, a naive bayes classifier algorithm, a K-nearest neighbours (KNN) algorithm, a support vector machine (SVM) algorithm. A static object is an object whose properties (such as position, shape, size, and the like) do not change with time, whereas a dynamic object is an object whose properties change with time. Examples of static objects are a wall, furniture, a toy, a poster, and the like. Examples of dynamic objects are a human, a pet, a robot, and the like. Optionally, the at least one server is configured to store information indicative of the aforesaid classification of the plurality of objects, at the data repository.

Optionally, the classification of each of the plurality of objects as either the static object or the dynamic object is performed on per-pixel basis. This means that each pixel in the plurality of images is classified to be representative of either the static object or the dynamic object. Such classification may also be performed in a per-fragment manner, wherein a given fragment comprises at least one pixel.

Notably, the at least one current image of the real-world environment represents a current (namely, a latest or a present) view of the real-world environment from a current perspective of the at least one camera. The at least one current image represents the at least one object that is visible from the current perspective of the at least one camera. Optionally, when processing the at least one current image to detect the at least one object, the at least one server is configured to employ the at least one object detection algorithm.

Optionally, when determining whether or not the at least one object is from amongst the plurality of objects, the at least one server is configured to match the at least one object with the plurality of objects, wherein a given object is determined to be from amongst the plurality of objects when the given object matches with a corresponding object from amongst the plurality of objects. Optionally, when it is determined that the at least one object is not from amongst the plurality of objects, the at least one server is configured to update the 3D environment model to also represent the at least one object therein. Such a case occurs when the at least one object is introduced in the real-world environment after the generation of the 3D environment model. As a result of such updating, the 3D environment model accurately represents new object(s) as they are introduced in the real-world environment.

The at least one server is configured to determine whether the at least one object is a static object or a dynamic object, based on how its corresponding matching object from amongst the plurality of objects was classified previously. For example, a wall represented in the plurality of images may be classified as a static object, whereas a dog represented in the plurality of images may be classified as a dynamic object, upon generation of the 3D environment model. When a tail of the dog is represented in a current image, the tail is determined to be a dynamic object, since the dog was previously classified as a dynamic object.

As mentioned previously, dynamic objects are those objects whose properties change with time. When a given dynamic object is represented in the 3D environment model but not in the at least one current image, it means one of the following:
- the given dynamic object is not present in a field of view of the at least one camera capturing the at least one current image,
- the given dynamic object is present in the field of view but is occluded by another object, or
- the given dynamic object is not present in the real-world environment anymore.

In each of these cases, it is understood that a representation of the given dynamic object in the 3D environment model is stale (i.e., old) as it is based on obsolete data (i.e., the plurality of images) instead of current data (i.e., the at least one current image). This staleness is visually indicated by the system, by applying the first visual effect to the representation of the given dynamic object, to beneficially provide clarity with respect to recency of dynamic content in the 3D environment model.

For example, a girl may be present in a room (i.e., a real-world environment) at time T1. In such a case, the 3D environment model of the room would include a representation of the girl. Now let us consider that the at least one camera turns away from the girl so that at time T2 (which is later than the time T1) the girl is no longer in a field of view of any of the at least one camera. Then, in such a situation, the representation of the girl in the 3D environment model would be stale and thus the first visual effect would be applied to it.

It will be appreciated that there may occur a situation wherein a first part of the given dynamic object is represented in the at least one current image, while a second part of the given dynamic object is not represented in the at least one current image. In such a situation, when the second part of the given dynamic object is represented in the 3D environment model, the first visual effect is only applied to a representation of the second part of the given dynamic object in the 3D environment model for indicating staleness, and not to a representation of the first part of the given dynamic object. For example, if a tail of a cat is occluded behind a sofa and is not visible in the at least one current image, the first visual effect is applied to only a representation of the tail of the cat in the 3D environment model, and not to a representation of other parts of the cat.

Optionally, when applying a given visual effect, the at least one server is configured to employ at least one image processing technique. The at least one image processing algorithm, when employed enables in effective visualisation of stale content in the 3D environment model. The at least one image processing technique includes at least one of: fading, tint adjustment, a volumetric effect, saturation adjustment, re-colouring, inpainting (for example, for hallucinating textures), brightness adjustment, blurring, distortion.

Optionally, when applying the first visual effect to the representation of said dynamic object in the three-dimensional environment model, the at least one server is configured to:
- determine whether or not said dynamic object lies within a field of view of the at least one camera; and
- select the first visual effect to be applied as one of: fading, desaturation, when it is determined that said dynamic object does not lie within the field of view of the at least one camera.

Optionally, when determining whether said dynamic object lies within the field of view of the at least one camera, the at least one server is configured to:
- receive information indicative of a current pose of the at least one camera from which the at least one current image is captured, or determine, from the at least one current image and the 3D environment model, the current pose of the at least one camera from which the at least one current image is captured;
- utilise the three-dimensional environment model to determine a set of objects whose positions in the real-world environment lie within a perspective of the current pose of the at least one camera; and
- determine that said dynamic object lies within the field of view of the at least one camera, when said dynamic object belongs to the set.

The term "pose" encompasses both position and orientation. A given perspective of the at least one camera changes when the at least one camera is moved around the real-world environment with a same orientation or with changing orientations, or when the at least one camera is stationary and only an orientation of the at least one camera changes. Optionally, in this regard, the information indicative of the current pose of the at least one camera is generated by a pose-tracking means. The pose-tracking means is a specialized equipment that is employed to detect and/or follow poses of the at least one camera or the at least one device (comprising the at least one camera) in a 3D space of a given real-world environment. Pursuant to embodiments of the present disclosure, the pose-tracking means is implemented as a true six Degrees of Freedom (6DoF) tracking system.

The pose-tracking means could be implemented as an internal component of a given device, as a tracking system external to the given device, or as a combination thereof. The pose-tracking means could be implemented as at least one of: an optics-based tracking system (which utilizes, for example, infrared (IR) beacons and detectors, IR cameras, visible-light cameras, detectable objects and detectors, and the like), an acoustics-based tracking system, a radio-based tracking system, a magnetism-based tracking system, an accelerometer, a gyroscope, an Inertial Measurement Unit (IMU), a Timing and Inertial Measurement Unit (TIMU), a Global Positioning System (GPS) tracking system. As an example, a detectable object may be an active IR Light-Emitting Diode (LED), a visible LED, a laser illuminator, a Quick Response (QR) code, an ArUco marker, an anchor marker, a Radio Frequency Identification (RFID) marker, and the like. A detector may be implemented as at least one of: an IR camera, an IR transceiver, a visible light camera, an RFID reader. Optionally, the pose-tracking means is implemented as at least one processor that is configured to determine a given pose of the at least one camera using a Simultaneous Localization and Mapping (SLAM) technique.

Optionally, the at least one server is configured to process the information indicative of the current pose for determining the current pose of the at least one camera in the global coordinate space, wherein the information indicative of the current pose of the at least one camera comprises pose-tracking data of the at least one camera. Optionally, the at least one server employs at least one data processing algorithm to process the pose-tracking data of the at least one camera. The pose-tracking data may be in form of images, IMU/TIMU values, motion sensor data values, magnetic field strength values, or similar. Correspondingly, requisite data processing algorithm(s) is/are employed to process the pose-tracking data. Moreover, the pose-tracking means employs either an outside-in tracking technique or an inside-out tracking technique for collecting the pose-tracking data. Optionally, the at least one current image is mapped with the 3D environment model to determine the current pose of the at least one camera from which the at least one current image is captured. Optionally, the at least one server is configured to map the current pose of the at least one camera onto a corresponding region of the 3D environment model, to determine the set of objects. When said dynamic object belongs to the set, it is determined to lie within the field of view of the at least one camera, otherwise, it is determined to not lie within the field of view. Optionally, the determination of whether or not said dynamic object lies within the field of view of the at least one camera is performed in a per-pixel (or per-fragment) manner.

When the first visual effect is selected to be one of: fading, desaturation, the first visual effect indicates staleness the representation of said dynamic object in the 3D environment model. In such a case, since the at least one camera is not currently imaging said dynamic object, the representation of said dynamic object in the 3D environment model is outdated (and may be incorrect). In an example, a person (namely, a dynamic object) may be represented in the 3D environment model as being seated on a sofa (namely, a static object). When the person is not visible in the at least one current image since the person does not lie within the field of view of the at least one camera currently, a representation of the person in the 3D environment model may be faded (for example, to grayscale) to indicate that said representation is stale (i.e., non-recent).

A technical benefit of applying fading to the representation of said dynamic object in the 3D environment model is that an opacity of the representation is reduced in a manner that said representation blends in with other content in the 3D environment model. In this way, stale representations of dynamic objects do not stand out visually in the 3D environment model. A technical benefit of applying desaturation to the representation of said dynamic object in the 3D environment model is that colours in said representation appears more muted with respect to colours in the other content in the 3D environment model.

Moreover, optionally, when applying the first visual effect to the representation of said dynamic object in the three-dimensional environment model, the at least one server is configured to:
- determine whether or not said dynamic object lies within a field of view of the at least one camera;
- determine whether said dynamic object is occluded by another dynamic object or by a static object in the at least one current image, when it is determined that said dynamic object lies within the field of view of the at least one camera;
- select the first visual effect to be applied as one of: fading, desaturation, when it is determined that said dynamic object is occluded by the static object in the at least one current image; and
- select the first visual effect to be applied as at least one of: fading, deleting said dynamic object, when it is determined that said dynamic object is occluded by another dynamic object in the at least one current image.

Optionally, when determining whether said dynamic object is occluded by another dynamic object or by a static object in the at least one current image, the at least one server is configured to:
- identify a region of the at least one current image whereat said dynamic object would have been represented if it were not occluded, based on the current pose of the at least one camera and a position of said dynamic object in the real-world environment; and
- classify an object represented at said region in the at least one current image as either a static object or a dynamic object.

Optionally, when identifying the region of the at least one current image whereat said dynamic object would have been represented if it were not occluded, the at least one server is configured to:
- map the current pose of the at least one camera to a corresponding portion of the 3D environment model that is visible from a perspective of the current pose,
- map the position of said dynamic object to an area lying within the corresponding portion of the 3D environment model; and
- identify the region of the at least one current image based on a location of the area lying within the corresponding portion.

Notably, if a given object (such as the static object or another dynamic object) is placed between the at least one camera and said dynamic object, the given object occludes said dynamic object, due to which said dynamic object is not represented in the at least one current image. In a first example, a cat hiding behind a door may be occluded by the door, and thus may not be represented in the at least one current image. In a second example, a cat may be hugged by a human facing away from the at least one camera, such that the cat is occluded by the human and is not represented in the at least one current image. Optionally, the at least one server employs the at least one object classification algorithm to determine whether said dynamic object is occluded by another dynamic object or by a static object in the at least one current image. Optionally, the determination of whether said dynamic object is occluded by another dynamic object or by the static object in the at least one current image is performed in a per-pixel (or per-fragment) manner.

Different first visual effects are selected to be applied depending on whether the static object or another dynamic object occludes said dynamic object. A technical benefit in doing so is that it provides a visual indication as to a nature of the given object occluding said dynamic object. Referring to the first example, a representation of the cat may be desaturated to indicate that it is a stale representation. Referring to the second example, a representation of the cat may be deleted to indicate that it is a stale representation. A technical benefit of applying deleting of said dynamic object in the 3D environment model is that stale dynamic content is effectively removed from the 3D environment model.

It will be appreciated that the other dynamic object which may occlude said dynamic object may be: a dynamic object that is actually different from said dynamic object, or a current version of said dynamic object itself. This current version of said dynamic object may have a different position, shape, size, and the like, as compared to said dynamic object. In an example, said dynamic object may be a person whose first representation in the 3D environment model indicates that the person is at a position P1 in the real-world environment. Now a current image may represent the same person to be at a position P2 in the real-world environment, wherein this second representation (i.e., version) of the person occludes the first representation of the person at the position P1. In such a case, the first representation of the person may be deleted to remove (i.e., clean-up) a trail of motion, and accurately update the 3D environment model. In another example, a person may extrude forward towards the at least one camera without changing his/her position. In such a case, a first representation of the person in the 3D environment model that is generated prior to such extrusion is occluded by a second representation of the person in the at least one current image. The first representation may be compared, using at least one image processing algorithm, with the second representation since the second representation is likely to have a different shape and size as compared to the first representation, whilst having a same position as the first representation. By such comparison, the at least one server effectively differentiates between extruding objects and moving objects, as for extruding objects their positions in different representations would be same. In such an example, the first representation of the person may be deleted, as it is stale.

Optionally, when it is determined that said dynamic object is occluded by another dynamic object in the at least one current image, the first visual effect is applied to the representation of said dynamic object in the three-dimensional environment model in a manner that said dynamic object is faded initially and is deleted from the three-dimensional environment model after a predefined time period from fading. In such a case, the first visual effect is selected to be a combination of fading and deleting said dynamic object. Optionally, the predefined time period from fading lies in a range of 0.1 seconds to 10 seconds. For example, the predefined time period from fading may be from 0.1, 0.5, 1, 2 or 5 seconds up to 1, 2, 5 or 10 seconds. In an example, the predefined time period may be 0.5 seconds. A technical benefit of initially fading said dynamic object and then deleting it from the 3D environment model after the predefined time period from fading is that it gradually blends said dynamic object into its background and finally effectively cleans-up trails left by said dynamic object by deleting said dynamic object.

Optionally, when it is determined that said dynamic object is occluded by another dynamic object in a first current image captured by a first camera but is visible in a second current image captured by a second camera, wherein the second current image represents said dynamic object to be in a same position as represented in the three-dimensional environment model, the at least one server is configured to update a representation of said object in the three-dimensional environment model using a representation of said object in the second current image. Herein, the first visual effect is not applied to the representation of said dynamic object in the 3D environment model because the representation of said dynamic object is not stale, and it is being represented in the second current image.

Optionally, the at least one server is further configured to, for each static object that is represented in the three-dimensional environment model but not in the at least one current image, apply a second visual effect to a representation of said static object in the three-dimensional environment model for indicating staleness of said representation. Notably, when a given static object is represented in the 3D environment model but not in the at least one current image, it means that the given static object: does not lie within a field of view of the at least one camera capturing the at least one current image, lies within the field of view of the at least one camera capturing the at least one current image but is occluded by another object, or is not present in the real-world environment. In each of these cases, it is understood that the representation of the given static object in the 3D environment model is stale (i.e., old or outdated) as it is based on obsolete data (i.e., the plurality of images) instead of current data (i.e., the at least one current image). This staleness is visually indicated by the system, by applying the second visual effect to the representation of the given static object, to beneficially provide clarity with respect to recency of static content in the 3D environment model. For example, if a book that is present in a library represented in the 3D environment model, is taken from the library after generation of the 3D environment model, the book would not be visible in the at least one current image and the representation of the book in the library, in the 3D environment model, is stale. In such a case, the second visual effect is applied to a representation of the book in the 3D environment model.

Optionally, the second visual effect is darkening a tint of said static object. The darkening of tint of said static object causes a reduction in brightness (or lightness) of said static object. The darkening of tint may be employed as the second visual effect as a visual indication of the representation of said static object in the 3D environment model being stale. A technical effect of applying the second visual effect is clear and easy recognition of stale representations of static objects in the 3D environment model.

Optionally, the at least one server is further configured to, for each object that is represented in the three-dimensional environment model and also in the at least one current image, update a representation of said object in the three-dimensional environment model using a representation of said object in the at least one current image. In this regard, the object may be a static object or a dynamic object. Notably, properties of the object as represented in the 3D environment model and in the at least one current image may be same or different. Since an up-to-date representation of said object is available in the at least one current image, the (existing) representation of said object in the 3D environment model is updated using the representation of said object in the at least one current image. The representation of said object in the 3D environment model is stale, and may not be correct, which is why updating said representation is beneficial to improve an accuracy of the 3D environment model. In this way, the 3D environment model is always updated with respect to actual changes in the real-world environment. Such updating of the representation of said object in the 3D environment model is performed in real time or near-real time. Optionally, when updating the representation of said object in the 3D environment model, the at least one server is configured to employ the at least one data processing algorithm which is used for generating the 3D environment model of the real-world environment.

For example, if a painting is represented as being hung on a first wall in the 3D environment model, and is represented to be hung on a second wall in the at least one current image, it may be deduced that a location of the painting has been manually changed from the first wall to the second wall. Herein, the representation of the painting in the 3D environment model should be updated by changing it from being on the first wall to being on the second wall in the 3D environment model, in order to provide a correct visual representation of the real-world environment.

Optionally, when said object is a dynamic object and the at least one current image comprises a sequence of current images captured by the at least one camera, the at least one server is further configured to:
- process the sequence of current images to detect a sequence of locations of the dynamic object as represented therein; and
- update the three-dimensional environment model by deleting at least one previous representation of the dynamic object from at least one previous location from amongst the sequence of locations.

Optionally, in this regard, pixels of the sequence of current images are previously classified, using per-pixel classification (or per-fragment classification), as being representative of either a static object or a dynamic object, and pixels representing the dynamic object are identified accordingly. Such classification is performed using the at least one object classification algorithm. Therefore, when processing the sequence of current images to detect the sequence of locations of the dynamic object as represented therein, the at least one server tracks locations of the pixels representing the dynamic object. Notably, the sequence of locations of the dynamic object indicate that the dynamic object is currently moving within the real-world environment. Herein, a movement of the dynamic object is defined by the sequence of locations of the dynamic object. As the dynamic object is in motion, the at least one previous representation of the dynamic object at the at least one previous location is obsolete (and thus, inaccurate). Therefore, the at least one previous representation is deleted to update the 3D environment model. In this way, the 3D environment model includes only a latest representation of the dynamic object at its latest location (amongst the sequence of locations). A technical benefit of deleting the at least one previous representation of the dynamic object from the at least one previous location is that it prevents creation of trails of moving dynamic objects in the 3D environment model. This enables in providing a realistic visual scene to a user.

For example, if a human walks towards the at least one camera while the at least one camera captures a sequence of current images, the sequence of current images would include multiple representations of the human at different positions. Such multiple representations would create a trail of motion of the human, since later positions of the human would occlude previous positions of the human. Therefore, only a latest representation of the human at a latest location is used to update the 3D environment model, and other previous representations from previous locations are deleted.

Optionally, the at least one server is further configured to, for each region of the real-world environment that is represented in the three-dimensional environment model but not in the at least one current image, apply at least one third visual effect to a representation of said region, the at least one third visual effect being at least one volumetric effect. Herein, the third visual effect is a spatial effect that is applied to all occluded regions of the 3D environment model (i.e., all regions in the 3D environment model which are not captured in the at least one current image) to indicate that representations of such regions in the 3D environment model are stale. The third visual effect is a three-dimensional visual effect. Optionally, the at least one volumetric effect is at least one of: a volumetric fog, a volumetric lighting, a volumetric halo, a volumetric light shaft. A technical effect of applying the at least one third visual effect is that this allows stale representations of real-world regions in the 3D environment model to be visually indicated clearly.

Optionally, when applying a given visual effect, the at least one server is configured to control at least one of: an intensity of the given visual effect, a colour associated with the given visual effect, a speed of applying the given visual effect, a time duration of applying the given visual effect, removal of the given visual effect. The intensity of the given visual effect pertains to how much of (i.e., an amount of) the given visual effect is applied. For example, an intensity of a volumetric fog may be controlled by the at least one server. In such an example, a dense fog may be applied when the intensity of the volumetric fog is high, while a sparse fog may be applied when the intensity of the volumetric fog is low. The speed of applying the given visual effect pertains to a rate at which the given visual effect is applied, whereas the time duration of applying the given visual effect pertains to a time period in which the visual effect is applied. In an example, the speed of applying a fading effect may be controlled by the at least one server while the time duration of applying the fading effect is kept constant. In such an example, a high speed of applying the fading effect may result in a high amount of fading (for example, 75% fading) in the time duration as compared to a low speed of fading which would result in a less amount of fading (for example, 25% fading). In another example, the time duration of applying a fading effect may be controlled by the at least one server while the speed of applying the fading effect is kept constant. In such an example, a long time duration of applying the fading effect may result in a high amount of fading (for example, 80% fading) at the fixed speed as compared to a short time duration of fading which would result in a less amount of fading (for example, 20% fading). The colour associated with the given visual effect pertains to a colour employed for applying the given visual effect. For example, the colour associated with the second visual effect may be a black colour which enables in effectively darkening a tint of a given static object. The removal of the given visual effect is controlled to turn-off (i.e., stop) application of the given visual effect. A technical advantage of controlling at least one of the aforementioned factors of the given visual effect is that it allows for a granular level of control over application of the given visual effect.

Optionally, the at least one server is further configured to:
- receive, from at least one client device, information indicative of a given pose of at least one client device;
- utilise the three-dimensional environment model to generate at least one reconstructed image from a perspective of the given pose of the at least one client device; and
- send the at least one reconstructed image to the at least one client device for display thereat.

Notably, the at least one reconstructed image is generated according to the given pose of the at least one client device. In this regard, the given pose of the at least one client device is mapped to a corresponding portion of the 3D environment model and said portion is represented in the at least one reconstructed image. The at least one reconstructed image represents the visual content of the real-world environment from the perspective of the given pose of the at least one client device in the global coordinate space, said visual content being generated using the 3D environment model. Optionally, the system further comprises the at least one client device. Optionally, the at least one client device may be implemented as a display device. The at least one client device may be present in the same real-world environment, or in another environment. Optionally, the given pose of the at least one client device is determined in a local coordinate space of a real-world environment whereat the at least one client device is present. In this regard, the at least one server is configured to map the given pose of the at least one client device from the local coordinate space to the global coordinate space.

Optionally, when utilising the 3D environment model to generate the at least one reconstructed image, the at least one server is configured to employ at least one data processing algorithm. Optionally, in this regard, the at least one data processing algorithm enables in transforming a 3D point in the 3D environment model to a two-dimensional point in the at least one reconstructed image, from the perspective of the given pose of the client device. Optionally, the at least one data processing algorithm is at least one of: an image synthesis algorithm (such as an RGB-D image synthesis algorithm), a view synthesis algorithm, a rendering algorithm. In an example, when the 3D environment model is in the form of a 3D polygonal mesh, for example, such as a 3D triangular mesh, the image synthesis algorithm may be a triangle rasterization algorithm. In another example, when the 3D environment model is in the form of a voxel-based model (such as a Truncated Signed Distance Field (TSDF) model), the image synthesis algorithm may be a ray marching algorithm. In yet another example, when the 3D environment model is in the form of a 3D point cloud, the rendering algorithm may be a point cloud rendering algorithm, a point cloud splatting algorithm, an elliptical weighted-average surface splatting algorithm, and the like.

It will be appreciated that since staleness information (i.e., an indication of stale content in the 3D environment model) is constantly updated by the at least one server using the aforementioned visual effects, the at least one reconstructed image generated using the 3D environment model is always up-to-date. Moreover, the generation of the at least one reconstructed image takes into account such staleness information. In an example, the stale visual content in the 3D environment model is represented as it is (i.e., with a given visual effect applied thereto), in the at least one reconstructed image. A viewer of the at least one reconstructed image is thus able to accurately identity the stale visual content. In another example, if a stale dynamic object is to be represented in the at least one reconstructed image, the at least one server may hallucinate pixels corresponding to the stale dynamic object using pixel values of pixels corresponding to non-stale objects surrounding the stale object, when generating the at least one reconstructed image. Beneficially, the at least one reconstructed image is highly accurate (in terms of representing the real-world environment from the perspective of the given pose of the at least one client device), is realistic, and is information-rich.

The present disclosure also relates to the method as described above. Various embodiments and variants disclosed above, with respect to the aforementioned first aspect, apply *mutatis mutandis* to the method.

Optionally, the step of applying the first visual effect to the representation of said dynamic object in the three-dimensional environment model comprises:
- determining whether or not said dynamic object lies within a field of view of the at least one camera; and
- selecting the first visual effect to be applied as one of: fading, desaturation, when it is determined that said dynamic object does not lie within the field of view of the at least one camera.

Optionally, the step of applying the first visual effect to the representation of said dynamic object in the three-dimensional environment model comprises:
- determining whether or not said dynamic object lies within a field of view of the at least one camera;
- determining whether said dynamic object is occluded by another dynamic object or by a static object in the at least one current image, when it is determined that said dynamic object lies within the field of view of the at least one camera;
- selecting the first visual effect to be applied as one of: fading, desaturation, when it is determined that said dynamic object is occluded by the static object in the at least one current image; and
- selecting the first visual effect to be applied as at least one of: fading, deleting said dynamic object, when it is determined that said dynamic object is occluded by another dynamic object in the at least one current image.

Optionally, when it is determined that said dynamic object is occluded by another dynamic object in the at least one current image, the first visual effect is applied to the representation of said dynamic object in the three-dimensional environment model in a manner that said dynamic object is faded initially and is deleted from the three-dimensional environment model after a predefined time period from fading.

Optionally, the method further comprises, for each static object that is represented in the three-dimensional environment model but not in the at least one current image, applying a second visual effect to a representation of said static object in the three-dimensional environment model for indicating staleness of said representation.

Optionally, the second visual effect is darkening a tint of said static object.

Optionally, the method further comprises, for each object that is represented in the three-dimensional environment model and also in the at least one current image, updating a representation of said object in the three-dimensional environment model using a representation of said object in the at least one current image.

Optionally, when said object is a dynamic object and the at least one current image comprises a sequence of current images captured by the at least one camera, the method further comprises:
- processing the sequence of current images to detect a sequence of locations of the dynamic object as represented therein; and
- updating the three-dimensional environment model by deleting at least one previous representation of the dynamic object from at least one previous location from amongst the sequence of locations.

Optionally, the method further comprises, for each region of the real-world environment that is represented in the three-dimensional environment model but not in the at least one current image, applying at least one third visual effect to a representation of said region, the at least one third visual effect being at least one volumetric effect.

Optionally, the step of applying a given visual effect comprises controlling at least one of: an intensity of the given visual effect, a colour associated with the given visual effect, a speed of applying the given visual effect, a time duration of applying the given visual effect, removal of the given visual effect.

Optionally, the method further comprises:
- receiving, from at least one client device, information indicative of a given pose of at least one client device;
- utilising the three-dimensional environment model to generate at least one reconstructed image from a perspective of the given pose of the at least one client device; and
- sending the at least one reconstructed image to the at least one client device for display thereat.

### DETAILED DESCRIPTION OF THE DRAWINGS

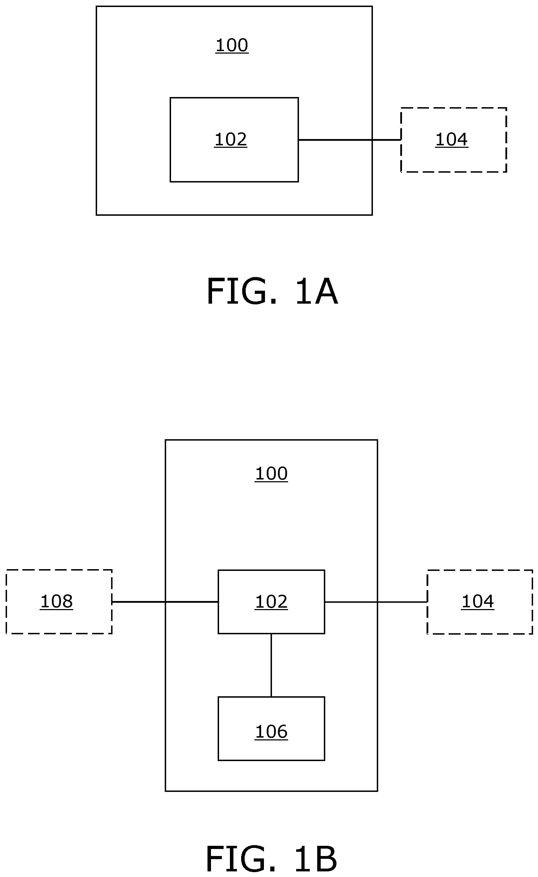

Referring to FIGs. 1A and 1B, illustrated are block diagrams of architectures of a system **100** for visually indicating stale content in an environment model, in accordance with different embodiments of the present disclosure. The system **100** comprises at least one server (depicted as a server **102**). The server **102** is communicably coupled to at least one camera (depicted as a camera **104**) or at least one device comprising the at least one camera. In FIG. 1B, the system **100** is shown to further comprise a data repository **106** communicably coupled to the server **102.** The server **102** is also communicably coupled to at least one client device (depicted as a client device **108**).

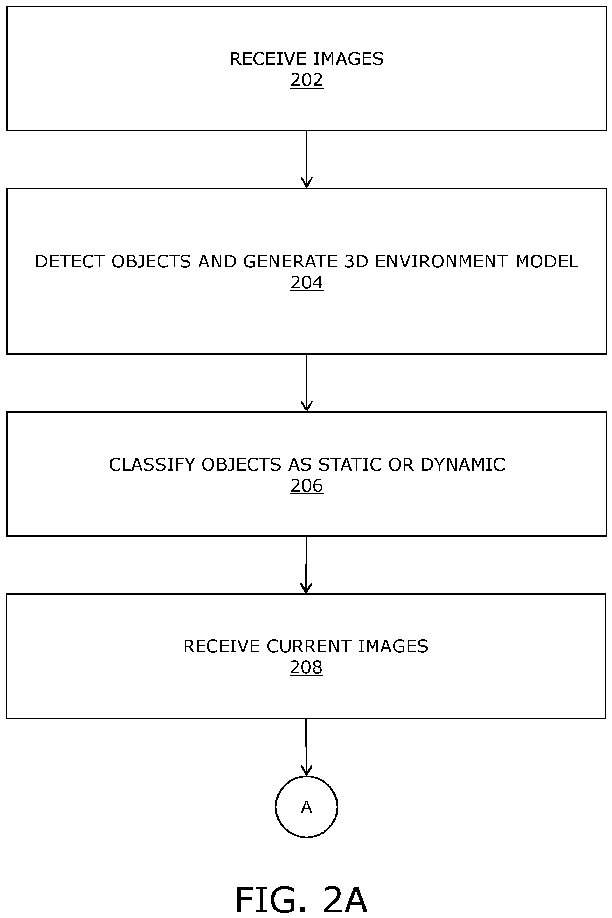

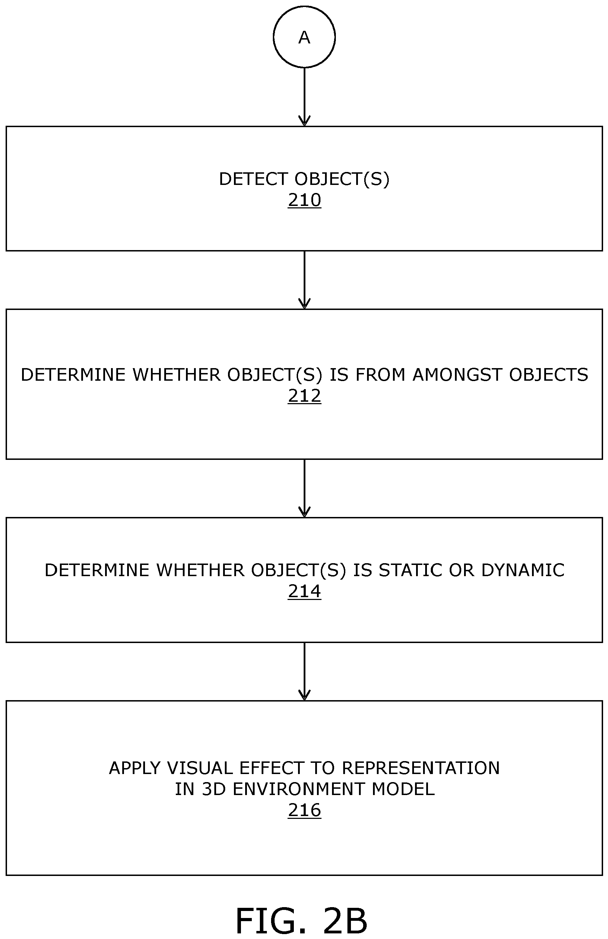

Referring to FIGs. 2A and 2B, illustrated are steps of a method for visually indicating stale content in an environment model, in accordance with an embodiment of the present disclosure. At step **202,** a plurality of images of a real-world environment, captured by at least one camera, are received. At step **204,** the plurality of images are processed to detect a plurality of objects present in the real-world environment and a three-dimensional (3D) environment model of the real-world environment is generated, wherein the three-dimensional environment model represents the plurality of objects. At step **206**, each of the plurality of objects is classified as either a static object or a dynamic object. At step **208,** at least one current image of the real-world environment, captured by the at least one camera, is received. At step **210,** the at least one current image is processed to detect at least one object represented therein. At step **212,** it is determined whether or not the at least one object is from amongst the plurality of objects. At step **214,** when it is determined that the at least one object is from amongst the plurality of objects, it is determined whether the at least one object is a static object or a dynamic object. At step **216,** for each dynamic object that is represented in the three-dimensional environment model but not in the at least one current image, a first visual effect is applied to a representation of said dynamic object in the three-dimensional environment model for indicating staleness of said representation.

The aforementioned steps are only illustrative and other alternatives can also be provided where one or more steps are added, one or more steps are removed, or one or more steps are provided in a different sequence without departing from the scope of the claims herein.

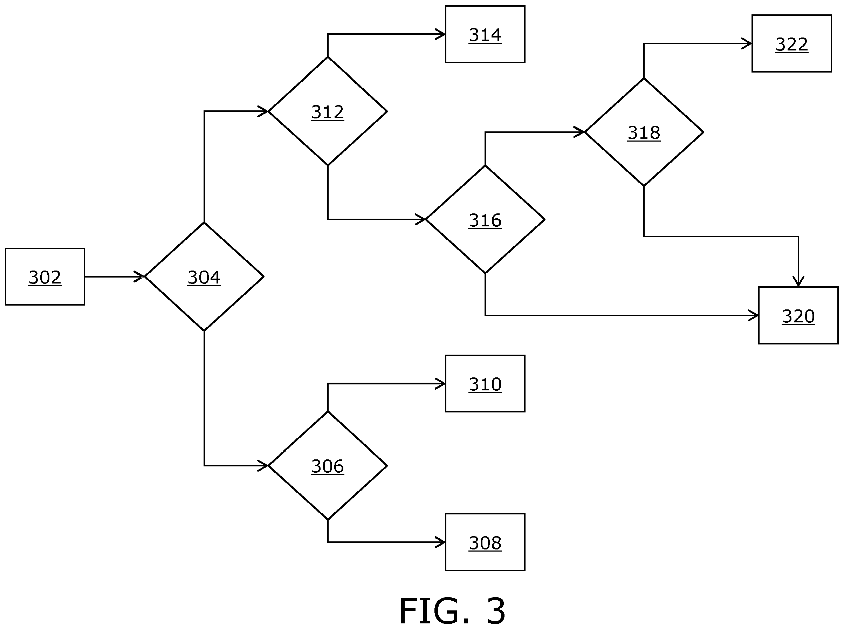

FIG. 3 is an illustration of an exemplary detailed processing flow implemented by a system for visually indicating stale content in an environment model, in accordance with an embodiment of the present disclosure. At **302,** at least one current image is processed to detect at least one object represented therein. Moreover, it is determined whether or not the at least one object is from amongst a plurality of objects (that are detected previously and are represented in a three-dimensional (3D) environment model). At **304,** it is determined whether the at least one object is a static object or a dynamic object. When it is determined that the at least one object is the static object, at **306,** it is determined whether or not said static object is represented in the at least one current image. At **308,** for each static object that is represented in the 3D environment model but not in the at least one current image, a second visual effect is applied to a representation of said static object in the 3D environment model for indicating staleness of said representation. Optionally, the second visual effect is darkening a tint of said static object. At **310,** for each static object that is represented in the 3D environment model and also in the at least one current image, a representation of said static object in the 3D environment model is updated using a representation of said static object in the at least one current image.

When it is determined that the at least one object is the dynamic object, at **312,** it is determined whether or not said dynamic object is represented in the at least one current image. At **314,** for each dynamic object that is represented in the 3D environment model and in the at least one current image, a representation of said dynamic object in the 3D environment model is updated using a representation of said dynamic object in the at least one current image. For each dynamic object that is represented in the 3D environment model but not in the at least one current image, at **316,** it is determined whether or not said dynamic object lies within a field of view of the at least one camera. When it is determined that said dynamic object does not lie within the field of view of the at least one camera, at **320,** a first visual effect is applied to the representation of said dynamic object in the three-dimensional environment model for indicating staleness of said representation. On the other hand, when it is determined that said dynamic object lies within the field of view of the at least one camera, at **318,** it is determined whether said dynamic object is occluded by another dynamic object or by a static object in the at least one current image. When it is determined that said dynamic object is occluded by the static object in the at least one current image, or, when it is determined that said dynamic object does not lie within the field of view of the at least one camera, at **320,** a first visual effect is applied to the representation of said dynamic object in the three-dimensional environment model for indicating staleness of said representation. At **320,** the first visual effect is selected to be applied as one of: fading, desaturation. When it is determined that said dynamic object is occluded by another dynamic object in the at least one current image, at **322,** a first visual effect is applied to a representation of said dynamic object in the three-dimensional environment model for indicating staleness of said representation. At **322,** the first visual effect is selected to be applied as at least one of: fading, deleting said dynamic object.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100) comprising at least one server (102) configured to:
- receive a plurality of images of a real-world environment captured by at least one camera (104);
- process the plurality of images to detect a plurality of objects present in the real-world environment and generate a three-dimensional environment model of the real-world environment, wherein the three-dimensional environment model represents the plurality of objects;
- classify each of the plurality of objects as either a static object or a dynamic object;
- receive at least one current image of the real-world environment captured by the at least one camera;
- process the at least one current image to detect at least one object represented therein;
- determine whether or not the at least one object is from amongst the plurality of objects;
- determine whether the at least one object is a static object or a dynamic object when it is determined that the at least one object is from amongst the plurality of objects; and
- for each dynamic object that is represented in the three-dimensional environment model but not in the at least one current image, apply a first visual effect to a representation of said dynamic object in the three-dimensional environment model for indicating staleness of said representation.

2. The system (100) of claim 1, wherein, when applying the first visual effect to the representation of said dynamic object in the three-dimensional environment model, the at least one server (102) is configured to:
- determine whether or not said dynamic object lies within a field of view of the at least one camera (104); and
- select the first visual effect to be applied as one of: fading, desaturation, when it is determined that said dynamic object does not lie within the field of view of the at least one camera.

3. The system (100) of claim 1 or 2, wherein, when applying the first visual effect to the representation of said dynamic object in the three-dimensional environment model, the at least one server (102) is configured to:
- determine whether or not said dynamic object lies within a field of view of the at least one camera (104);
- determine whether said dynamic object is occluded by another dynamic object or by a static object in the at least one current image, when it is determined that said dynamic object lies within the field of view of the at least one camera;
- select the first visual effect to be applied as one of: fading, desaturation, when it is determined that said dynamic object is occluded by the static object in the at least one current image; and
- select the first visual effect to be applied as at least one of: fading, deleting said dynamic object, when it is determined that said dynamic object is occluded by another dynamic object in the at least one current image.

4. The system (100) of claim 3, wherein when it is determined that said dynamic object is occluded by another dynamic object in the at least one current image, the first visual effect is applied to the representation of said dynamic object in the three-dimensional environment model in a manner that said dynamic object is faded initially and is deleted from the three-dimensional environment model after a predefined time period from fading.

5. The system (100) of any of the preceding claims, wherein the at least one server (102) is further configured to, for each static object that is represented in the three-dimensional environment model but not in the at least one current image, apply a second visual effect to a representation of said static object in the three-dimensional environment model for indicating staleness of said representation.

6. The system (100) of any of the preceding claims, wherein the at least one server (102) is further configured to, for each object that is represented in the three-dimensional environment model and also in the at least one current image, update a representation of said object in the three-dimensional environment model using a representation of said object in the at least one current image.

7. The system (100) of claim 6, wherein when said object is a dynamic object and the at least one current image comprises a sequence of current images captured by the at least one camera (104), the at least one server (102) is further configured to:
- process the sequence of current images to detect a sequence of locations of the dynamic object as represented therein; and
- update the three-dimensional environment model by deleting at least one previous representation of the dynamic object from at least one previous location from amongst the sequence of locations.

8. The system (100) of any of the preceding claims, wherein the at least one server (102) is further configured to, for each region of the real-world environment that is represented in the three-dimensional environment model but not in the at least one current image, apply at least one third visual effect to a representation of said region, the at least one third visual effect being at least one volumetric effect.

9. The system (100) of any of the preceding claims, wherein the at least one server (102) is further configured to:
- receive, from at least one client device (108), information indicative of a given pose of at least one client device;
- utilise the three-dimensional environment model to generate at least one reconstructed image from a perspective of the given pose of the at least one client device; and
- send the at least one reconstructed image to the at least one client device for display thereat.

10. A computer-implemented method comprising:
- receiving a plurality of images of a real-world environment captured by at least one camera (104);
- processing the plurality of images to detect a plurality of objects present in the real-world environment and generate a three-dimensional environment model of the real-world environment, wherein the three-dimensional environment model represents the plurality of objects;
- classifying each of the plurality of objects as either a static object or a dynamic object;
- receiving at least one current image of the real-world environment captured by the at least one camera;
- processing the at least one current image to detect at least one object represented therein;
- determining whether or not the at least one object is from amongst the plurality of objects;
- determining whether the at least one object is a static object or a dynamic object when it is determined that the at least one object is from amongst the plurality of objects; and
- for each dynamic object that is represented in the three-dimensional environment model but not in the at least one current image, applying a first visual effect to a representation of said dynamic object in the three-dimensional environment model for indicating staleness of said representation.

11. The method of claim 10, wherein the step of applying the first visual effect to the representation of said dynamic object in the three-dimensional environment model comprises:
- determining whether or not said dynamic object lies within a field of view of the at least one camera (104); and
- selecting the first visual effect to be applied as one of: fading, desaturation, when it is determined that said dynamic object does not lie within the field of view of the at least one camera.

12. The method of claim 10 or 11, the step of applying the first visual effect to the representation of said dynamic object in the three-dimensional environment model comprises:
- determining whether or not said dynamic object lies within a field of view of the at least one camera (104);
- determining whether said dynamic object is occluded by another dynamic object or by a static object in the at least one current image, when it is determined that said dynamic object lies within the field of view of the at least one camera;
- selecting the first visual effect to be applied as one of: fading, desaturation, when it is determined that said dynamic object is occluded by the static object in the at least one current image; and
- selecting the first visual effect to be applied as at least one of: fading, deleting said dynamic object, when it is determined that said dynamic object is occluded by another dynamic object in the at least one current image.

13. The method of any of claims 10-12, further comprising, for each static object that is represented in the three-dimensional environment model but not in the at least one current image, applying a second visual effect to a representation of said static object in the three-dimensional environment model for indicating staleness of said representation.

14. The method of any of claims 10-13, further comprising, for each object that is represented in the three-dimensional environment model and also in the at least one current image, updating a representation of said object in the three-dimensional environment model using a representation of said object in the at least one current image.

15. The method of claim 14, wherein when said object is a dynamic object and the at least one current image comprises a sequence of current images captured by the at least one camera (104), the method further comprises:
- processing the sequence of current images to detect a sequence of locations of the dynamic object as represented therein; and
- updating the three-dimensional environment model by deleting at least one previous representation of the dynamic object from at least one previous location from amongst the sequence of locations.

## Patentansprüche

1. System (100), umfassend mindestens einen Server (102), der konfiguriert ist zum:
- Empfangen einer Vielzahl von Bildern einer realen Umgebung, die durch mindestens eine Kamera (104) aufgenommen werden;
- Verarbeiten der Vielzahl von Bildern, um eine Vielzahl von in der realen Umgebung vorhandenen Objekten zu erkennen und ein dreidimensionales Umgebungsmodell der realen Umgebung zu erzeugen, wobei das dreidimensionale Umgebungsmodell die Vielzahl von Objekten darstellt;
- Klassifizieren jedes der Vielzahl von Objekten als entweder ein statisches oder ein dynamisches Objekt;
- Empfangen mindestens eines aktuellen Bilds der realen Umgebung, das durch die mindestens eine Kamera aufgenommen wird;
- Verarbeiten des mindestens einen aktuellen Bilds, um mindestens ein darin dargestelltes Objekt zu erkennen;
- Bestimmen, ob das mindestens eine Objekt von der Vielzahl von Objekten stammt oder nicht;
- Bestimmen, ob das mindestens eine Objekt ein statisches oder ein dynamisches Objekt ist, wenn bestimmt wird, dass das mindestens eine Objekt von der Vielzahl von Objekten stammt; und
- für jedes dynamische Objekt, das in dem dreidimensionalen Umgebungsmodell, aber nicht in dem mindestens einen aktuellen Bild dargestellt ist, Anwenden eines ersten visuellen Effekts auf eine Darstellung des dynamischen Objekts in dem dreidimensionalen Umgebungsmodell zum Angeben einer Veraltung der Darstellung.

2. System (100) nach Anspruch 1, wobei, wenn der erste visuelle Effekt auf die Darstellung des dynamischen Objekts in dem dreidimensionalen Umgebungsmodell angewendet wird, der mindestens eine Server (102) konfiguriert ist zum:
- Bestimmen, ob das dynamische Objekt innerhalb eines Sichtfelds der mindestens einen Kamera (104) liegt oder nicht; und
- Auswählen des ersten anzuwendenden visuellen Effekts als einen von: Ausblenden, Entsättigung, wenn bestimmt wird, dass das dynamische Objekt nicht innerhalb des Sichtfelds der mindestens einen Kamera liegt.

3. System (100) nach Anspruch 1 oder 2, wobei, wenn der erste visuelle Effekt auf die Darstellung des dynamischen Objekts in dem dreidimensionalen Umgebungsmodell angewendet wird, der mindestens eine Server (102) konfiguriert ist zum:
- Bestimmen, ob das dynamische Objekt innerhalb eines Sichtfelds der mindestens einen Kamera (104) liegt oder nicht;
- Bestimmen, ob das dynamische Objekt durch ein anderes dynamisches Objekt oder durch ein statisches Objekt in dem mindestens einen aktuellen Bild verdeckt wird, wenn bestimmt wird, dass das dynamische Objekt innerhalb des Sichtfelds der mindestens einen Kamera liegt;
- Auswählen des ersten anzuwendenden visuellen Effekts als einen von: Ausblenden, Entsättigung, wenn bestimmt wird, dass das dynamische Objekt durch das statische Objekt in dem mindestens einen aktuellen Bild verdeckt wird; und
- Auswählen des ersten anzuwendenden visuellen Effekts als mindestens einen von: Ausblenden, Entfernen des dynamischen Objekts, wenn bestimmt wird, dass das dynamische Objekt durch ein anderes dynamisches Objekt in mindestens einem aktuellen Bild verdeckt wird.

4. System (100) nach Anspruch 3, wobei, wenn bestimmt wird, dass das dynamische Objekt durch ein anderes dynamisches Objekt in dem mindestens einen aktuellen Bild verdeckt wird, der erste visuelle Effekt auf die Darstellung des dynamischen Objekts in dem dreidimensionalen Umgebungsmodell in einer Weise angewendet wird, dass das dynamische Objekt zunächst ausgeblendet wird und nach einer vordefinierten Zeitspanne ab dem Ausblenden aus dem dreidimensionalen Umgebungsmodell entfernt wird.

5. System (100) nach einem der vorstehenden Ansprüche, wobei der mindestens eine Server (102) ferner konfiguriert ist zum, für jedes statische Objekt, das in dem dreidimensionalen Umgebungsmodell, aber nicht in dem mindestens einen aktuellen Bild dargestellt ist, Anwenden eines zweiten visuellen Effekts auf eine Darstellung des statischen Objekts in dem dreidimensionalen Umgebungsmodell zum Angeben der Veraltung der Darstellung.

6. System (100) nach einem der vorstehenden Ansprüche, wobei der mindestens eine Server (102) ferner konfiguriert ist zum, für jedes Objekt, das in dem dreidimensionalen Umgebungsmodell und ebenso in dem mindestens einen aktuellen Bild dargestellt ist, Aktualisieren einer Darstellung des Objekts in dem dreidimensionalen Umgebungsmodell unter Verwendung einer Darstellung des Objekts in dem mindestens einen aktuellen Bild.

7. System (100) nach Anspruch 6, wobei, wenn das Objekt ein dynamisches Objekt ist und das mindestens eine aktuelle Bild eine Sequenz von aktuellen Bildern umfasst, die durch die mindestens eine Kamera (104) aufgenommen werden, der mindestens eine Server (102) ferner konfiguriert ist zum:
- Verarbeiten der Sequenz von aktuellen Bildern, um eine Sequenz von Positionen des darin dargestellten dynamischen Objekts zu erkennen; und
- Aktualisieren des dreidimensionalen Umgebungsmodells durch Entfernen mindestens einer vorherigen Darstellung des dynamischen Objekts aus mindestens einer vorherigen Position von der Sequenz von Positionen.

8. System (100) nach einem der vorstehenden Ansprüche, wobei der mindestens eine Server (102) ferner konfiguriert ist zum, für jeden Bereich der realen Umgebung, der in dem dreidimensionalen Umgebungsmodell, aber nicht in dem mindestens einen aktuellen Bild dargestellt ist, Anwenden mindestens eines dritten visuellen Effekts auf eine Darstellung des Bereichs, wobei der mindestens eine dritte visuelle Effekt mindestens ein volumetrischer Effekt ist.

9. System (100) nach einem der vorstehenden Ansprüche, wobei der mindestens eine Server (102) ferner konfiguriert ist zum:
- Empfangen, von mindestens einer Client-Vorrichtung (108), von Informationen, die eine gegebene Pose mindestens einer Client-Vorrichtung angeben;
- Nutzen des dreidimensionalen Umgebungsmodells, um mindestens ein rekonstruiertes Bild aus einer Perspektive der gegebenen Pose der mindestens einen Client-Vorrichtung zu erzeugen; und
- Senden des mindestens einen rekonstruierten Bildes an die mindestens eine Client-Vorrichtung für eine dortigen Anzeige.

10. Computerimplementiertes Verfahren, umfassend:
- Empfangen einer Vielzahl von Bildern einer realen Umgebung, die durch mindestens eine Kamera (104) aufgenommen werden;
- Verarbeiten der Vielzahl von Bildern, um eine Vielzahl von in der realen Umgebung vorhandenen Objekten zu erkennen und ein dreidimensionales Umgebungsmodell der realen Umgebung zu erzeugen, wobei das dreidimensionale Umgebungsmodell die Vielzahl von Objekten darstellt;
- Klassifizieren jedes der Vielzahl von Objekten als ein statisches oder ein dynamisches Objekt;
- Empfangen mindestens eines aktuellen Bilds der realen Umgebung, das durch die mindestens eine Kamera aufgenommen wird;
- Verarbeiten des mindestens einen aktuellen Bilds, um mindestens ein darin dargestelltes Objekt zu erkennen;
- Bestimmen, ob das mindestens eine Objekt von der Vielzahl von Objekten stammt oder nicht;
- Bestimmen, ob das mindestens eine Objekt ein statisches Objekt oder ein dynamisches Objekt ist, wenn bestimmt wird, dass das mindestens eine Objekt von der Vielzahl von Objekten stammt; und
- für jedes dynamische Objekt, das in dem dreidimensionalen Umgebungsmodell, aber nicht in dem mindestens einen aktuellen Bild dargestellt ist, Anwenden eines ersten visuellen Effekts auf eine Darstellung des dynamischen Objekts in dem dreidimensionalen Umgebungsmodell zum Angeben der Veraltung der Darstellung.

11. Verfahren nach Anspruch 10, wobei der Schritt des Anwendens des ersten visuellen Effekts auf die Darstellung des dynamischen Objekts in dem dreidimensionalen Umgebungsmodell umfasst:
- Bestimmen, ob das dynamische Objekt innerhalb eines Sichtfelds der mindestens einen Kamera (104) liegt oder nicht; und
- Auswählen des ersten anzuwendenden visuellen Effekts als einen von: Ausblenden, Entsättigung, wenn bestimmt wird, dass das dynamische Objekt nicht innerhalb des Sichtfelds der mindestens einen Kamera liegt.

12. Verfahren nach Anspruch 10 oder 11, wobei der Schritt des Anwendens des ersten visuellen Effekts auf die Darstellung des dynamischen Objekts in dem dreidimensionalen Umgebungsmodell umfasst:
- Bestimmen, ob das dynamische Objekt innerhalb eines Sichtfelds der mindestens einen Kamera (104) liegt oder nicht;
- Bestimmen, ob das dynamische Objekt durch ein anderes dynamisches Objekt oder durch ein statisches Objekt in dem mindestens einen aktuellen Bild verdeckt wird, wenn bestimmt wird, dass das dynamische Objekt innerhalb des Sichtfelds der mindestens einen Kamera liegt;
- Auswählen des ersten anzuwendenden visuellen Effekts als einen von: Ausblenden, Entsättigung, wenn bestimmt wird, dass das dynamische Objekt durch das statische Objekt in dem mindestens einen aktuellen Bild verdeckt wird; und
- Auswählen des ersten anzuwendenden visuellen Effekts als mindestens einen von: Ausblenden, Entfernen des dynamischen Objekts, wenn bestimmt wird, dass das dynamische Objekt durch ein anderes dynamisches Objekt in dem mindestens einen aktuellen Bild verdeckt wird.

13. Verfahren nach einem der Ansprüche 10 bis 12, ferner umfassend, für jedes statische Objekt, das in dem dreidimensionalen Umgebungsmodell, aber nicht in dem mindestens einen aktuellen Bild dargestellt ist, das Anwenden eines zweiten visuellen Effekts auf eine Darstellung des statischen Objekts in dem dreidimensionalen Umgebungsmodell zum Angeben der Veraltung der Darstellung.

14. Verfahren nach einem der Ansprüche 10 bis 13, ferner umfassend, für jedes Objekt, das in dem dreidimensionalen Umgebungsmodell und ebenso in dem mindestens einen aktuellen Bild dargestellt ist, das Aktualisieren einer Darstellung des Objekts in dem dreidimensionalen Umgebungsmodell unter Verwendung einer Darstellung des Objekts in dem mindestens einen aktuellen Bild.

15. Verfahren nach Anspruch 14, wobei, wenn das Objekt ein dynamisches Objekt ist und das mindestens eine aktuelle Bild eine Sequenz von aktuellen Bildern umfasst, die durch die mindestens eine Kamera (104) aufgenommen werden, das Verfahren ferner umfasst:
- Verarbeiten der Sequenz von aktuellen Bildern, um eine Sequenz von Positionen des darin dargestellten dynamischen Objekts zu erkennen; und
- Aktualisieren des dreidimensionalen Umgebungsmodells durch Entfernen mindestens einer vorherigen Darstellung des dynamischen Objekts aus mindestens einer vorherigen Position von der Sequenz von Positionen.

## Revendications

1. Système (100) comprenant au moins un serveur (102) configuré pour :
- recevoir une pluralité d'images d'un environnement de monde réel capturées par au moins un appareil de prise de vues (104) ;
- traiter la pluralité d'images pour détecter une pluralité d'objets présents dans l'environnement de monde réel et générer un modèle d'environnement tridimensionnel de l'environnement de monde réel, dans lequel le modèle d'environnement tridimensionnel représente la pluralité d'objets ;
- classer chacun des objets de la pluralité d'objets soit comme objet statique, soit comme objet dynamique ;
- recevoir au moins une image actuelle de l'environnement de monde réel capturée par au moins un appareil de prise de vues ;
- traiter l'au moins une image actuelle pour y détecter au moins un objet représenté ;
- déterminer si l'au moins un objet fait partie ou non de la pluralité d'objets ;
- déterminer si l'au moins un objet est un objet statique ou un objet dynamique lorsqu'il est déterminé que l'au moins un objet fait partie de la pluralité d'objets ; et
- pour chaque objet dynamique représenté dans le modèle d'environnement tridimensionnel mais pas dans l'au moins une image actuelle, appliquer un premier effet visuel à une représentation dudit objet dynamique dans le modèle d'environnement tridimensionnel afin d'indiquer la stagnation de ladite représentation.

2. Système (100) selon la revendication 1, dans lequel, lors de l'application du premier effet visuel à la représentation dudit objet dynamique dans le modèle d'environnement tridimensionnel, l'au moins un serveur (102) est configuré pour :
- déterminer si ledit objet dynamique se trouve ou non dans le champ de vision de l'au moins un appareil de prise de vues (104) ; et
- sélectionner le premier effet visuel à appliquer comme l'un parmi : la décoloration, la désaturation, lorsqu'il est déterminé que ledit objet dynamique ne se trouve pas dans le champ de vision de l'au moins un appareil de prise de vues.

3. Système (100) selon la revendication 1 ou 2, dans lequel, lors de l'application du premier effet visuel à la représentation dudit objet dynamique dans le modèle d'environnement tridimensionnel, l'au moins un serveur (102) est configuré pour :
- déterminer si ledit objet dynamique se trouve ou non dans le champ de vision de l'au moins un appareil de prise de vues (104) ;
- déterminer si ledit objet dynamique est occulté par un autre objet dynamique ou par un objet statique dans l'au moins une image actuelle, lorsqu'il est déterminé que ledit objet dynamique se trouve dans le champ de vision de l'au moins un appareil de prise de vues ;
- sélectionner le premier effet visuel à appliquer comme l'un parmi : la décoloration, la désaturation, lorsqu'il est déterminé que ledit objet dynamique est occulté par l'objet statique dans l'au moins une image actuelle ; et
- sélectionner le premier effet visuel à appliquer comme au moins l'un parmi : la décoloration, la suppression dudit objet dynamique, lorsqu'il est déterminé que ledit objet dynamique est occulté par un autre objet dynamique dans l'au moins une image actuelle.

4. Système (100) selon la revendication 3, dans lequel, lorsqu'il est déterminé que ledit objet dynamique est occulté par un autre objet dynamique dans l'au moins une image actuelle, le premier effet visuel est appliqué à la représentation dudit objet dynamique dans le modèle d'environnement tridimensionnel de manière à ce que ledit objet dynamique soit initialement décoloré et soit supprimé du modèle d'environnement tridimensionnel après une période prédéfinie de décoloration.

5. Système (100) selon l'une quelconque des revendications précédentes, dans lequel l'au moins un serveur (102) est en outre configuré pour, pour chaque objet statique représenté dans le modèle d'environnement tridimensionnel mais pas dans l'au moins une image actuelle, appliquer un deuxième effet visuel à une représentation dudit objet statique dans le modèle d'environnement tridimensionnel pour indiquer la stagnation de ladite représentation.

6. Système (100) selon l'une quelconque des revendications précédentes, dans lequel l'au moins un serveur (102) est en outre configuré pour, pour chaque objet représenté dans le modèle d'environnement tridimensionnel et également dans l'au moins une image actuelle, mettre à jour une représentation dudit objet dans le modèle d'environnement tridimensionnel à l'aide d'une représentation dudit objet dans l'au moins une image actuelle.

7. Système (100) selon la revendication 6, dans lequel lorsque ledit objet est un objet dynamique et que l'au moins une image actuelle comprend une séquence d'images actuelles capturées par l'au moins un appareil de prise de vues (104), l'au moins un serveur (102) est en outre configuré pour :
- traiter la séquence d'images actuelles pour détecter une séquence d'emplacements de l'objet dynamique tel qu'il y est représenté ; et
- mettre à jour le modèle d'environnement tridimensionnel en supprimant au moins une représentation antérieure de l'objet dynamique à partir d'au moins un emplacement antérieur parmi la séquence d'emplacements.

8. Système (100) selon l'une quelconque des revendications précédentes, dans lequel l'au moins un serveur (102) est en outre configuré pour, pour chaque région de l'environnement réel qui est représentée dans le modèle d'environnement tridimensionnel mais pas dans l'au moins une image actuelle, appliquer au moins un troisième effet visuel à une représentation de ladite région, l'au moins un troisième effet visuel étant au moins un effet volumétrique.

9. Système d'affichage (100, 200) selon l'une quelconque des revendications précédentes, dans lequel l'au moins un serveur (102) est en outre configuré pour :
- recevoir, d'au moins un dispositif client (108), des informations indiquant une position donnée d'au moins un dispositif client ;
- utiliser le modèle d'environnement tridimensionnel pour générer au moins une image reconstruite du point de vue de la pose donnée de l'au moins un dispositif client ; et
- envoyer l'au moins une image reconstruite à l'au moins un dispositif client pour qu'il l'affiche.

10. Procédé mis en oeuvre par ordinateur comprenant :
- la réception d'une pluralité d'images d'un environnement de monde réel capturées par au moins un appareil de prise de vues (104) ;
- le traitement de la pluralité d'images pour détecter une pluralité d'objets présents dans l'environnement réel et générer un modèle d'environnement tridimensionnel de l'environnement réel, dans lequel le modèle d'environnement tridimensionnel représente la pluralité d'objets ;
- le classement de chacun des objets de la pluralité d'objets comme étant soit un objet statique, soit un objet dynamique ;
- la réception au moins d'une image actuelle de l'environnement réel capturée par au moins un appareil de prise de vues ;
- le traitement de l'image actuelle au moins pour détecter au moins un objet qui y est représenté ;
- le fait de déterminer si l'objet au moins fait partie de la pluralité d'objets ;
- le fait de déterminer si l'au moins un objet est un objet statique ou un objet dynamique lorsqu'il est déterminé que l'au moins un objet fait partie de la pluralité d'objets ; et
- pour chaque objet dynamique représenté dans le modèle d'environnement tridimensionnel mais pas dans l'au moins une image actuelle, l'application d'un premier effet visuel à une représentation dudit objet dynamique dans le modèle d'environnement tridimensionnel afin d'indiquer la stagnation de ladite représentation.

11. Procédé selon la revendication 10, dans lequel l'étape consistant à appliquer le premier effet visuel à la représentation dudit objet dynamique dans le modèle d'environnement tridimensionnel comprend :
- le fait de déterminer si ledit objet dynamique se trouve ou non dans le champ de vision de l'au moins un appareil de prise de vues (104) ; et
- la sélection du premier effet visuel à appliquer comme l'un parmi : la décoloration, la désaturation, lorsqu'il est déterminé que l'objet dynamique ne se trouve pas dans le champ de vision de l'au moins un appareil de prise de vues.

12. Procédé selon la revendication 10 ou 11, l'étape consistant à appliquer le premier effet visuel à la représentation de l'objet dynamique dans le modèle d'environnement tridimensionnel comprend :
- le fait de déterminer si ledit objet dynamique se trouve ou non dans le champ de vision de l'au moins un appareil de prise de vues (104) ;
- le fait de déterminer si ledit objet dynamique est occulté par un autre objet dynamique ou par un objet statique dans l'au moins une image actuelle, lorsqu'il est déterminé que ledit objet dynamique se trouve dans le champ de vision de l'au moins un appareil de prise de vues ;
- la sélection du premier effet visuel à appliquer comme l'un parmi : la décoloration, la désaturation, lorsqu'il est déterminé que ledit objet dynamique est occulté par l'objet statique dans l'au moins une image actuelle ; et
- la sélection du premier effet visuel à appliquer comme étant au moins l'un parmi : la décoloration, la suppression dudit objet dynamique, lorsqu'il est déterminé que ledit objet dynamique est occulté par un autre objet dynamique dans l'au moins une image actuelle.

13. Procédé selon l'une quelconque des revendications 10 à 12, comprenant en outre, pour chaque objet statique représenté dans le modèle d'environnement tridimensionnel mais pas dans l'au moins une image actuelle, l'application d'un deuxième effet visuel à une représentation dudit objet statique dans le modèle d'environnement tridimensionnel pour indiquer la stagnation de ladite représentation.

14. Procédé selon l'une quelconque des revendications 10 à 13, comprenant en outre, pour chaque objet représenté dans le modèle d'environnement tridimensionnel et également dans l'au moins une image actuelle, la mise à jour d'une représentation dudit objet dans le modèle d'environnement tridimensionnel à l'aide d'une représentation dudit objet dans l'au moins une image actuelle.

15. Procédé selon la revendication 14, dans lequel lorsque ledit objet est un objet dynamique et que l'au moins une image actuelle comprend une séquence d'images actuelles capturées par l'au moins un appareil de prise de vues (104), le procédé comprend en outre :
- le traitement de la séquence d'images actuelles pour détecter une séquence d'emplacements de l'objet dynamique tel qu'il y est représenté ; et
- la mise à jour du modèle d'environnement tridimensionnel en supprimant au moins une représentation antérieure de l'objet dynamique à partir d'au moins un emplacement antérieur parmi la séquence d'emplacements.
